Europäisches Patentamt

European Patent Office

Office européen des brevets

(19)

(11) Numéro de publication : **0 143 431**
**B1**

(12) **FASCICULE DE BREVET EUROPÉEN**

(45) Date de publication du fascicule du brevet :
**02.03.88**

(21) Numéro de dépôt : **84114068.4**

(22) Date de dépôt : **22.11.84**

(51) Int. Cl.⁴ : **H 04 M   3/30**, H 04 M   3/12,
H 04 Q  11/04

(54) Dispositif de secours d'un terminal d'abonné dans un concentrateur numérique.

(30) Priorité : **23.11.83 FR 8318645**

(43) Date de publication de la demande :
**05.06.85 Bulletin 85/23**

(45) Mention de la délivrance du brevet :
**02.03.88 Bulletin 88/09**

(84) Etats contractants désignés :
**BE CH DE FR GB IT LI NL SE**

(56) Documents cités :
**EP-A- 0 062 294**

(73) Titulaire : **ALCATEL CIT**
**33, rue Emeriau**
**F-75015 Paris (FR)**

(72) Inventeur : **Ollivier, Yves**
**Kerguinien**
**F-22700 Perros-Guirec (FR)**

(74) Mandataire : **Weinmiller, Jürgen et al**
**Lennéstrasse 9 Postfach 24**
**D-8133 Feldafing (DE)**

Jouve, 18, rue St-Denis, 75001 Paris, France

## Description

L'invention concerne un dispositif de secours d'un terminal d'abonné dans un concentrateur numérique, dans lequel les terminaux d'abonnés sont reliés aux lignes d'abonnés par l'intermédiaire des contacts des relais de renvoi aux essais des lignes d'abonnés et des terminaux d'abonnés, ces essais étant effectués par un dispositif d'essais de lignes et de terminaux relié par un bus d'essais de lignes et un bus d'essais de terminaux aux contacts desdits relais. Classiquement il est prévu au moins un terminal de secours pour un certain nombre de terminaux, et le bus d'essai de lignes est utilisé pour relier la ligne d'abonné du terminal en panne au terminal de secours par l'intermédiaire du relais de renvoi aux essais associé au terminal en panne. De ce fait le bus d'essais de lignes n'est plus disponible pour des essais de lignes ; le bus d'essais de terminaux étant relié au terminal en panne par le relais de renvoi aux essais associé audit terminal, suite à l'activation dudit relais résultant de la panne du terminal, il n'est donc également plus possible de procéder aux essais des terminaux, du moins tant que l'abonné du terminal en panne est en communication, puisque l'on ne peut mettre le relais de renvoi aux essais au repos ce qui interromprait la communication.

Lorsque le nombre de terminaux est important il n'est plus tolérable de ne pas pouvoir procéder à des essais de lignes et de terminaux lorsqu'un terminal est en panne. Les terminaux sont alors rassemblés en groupes et un dispositif d'essais est associé à chaque groupe qui comporte un terminal de secours ; ainsi les essais ne sont pas possibles uniquement dans le groupe ayant un terminal en panne. L'inconvénient d'une telle solution réside dans le fait qu'il est nécessaire de prévoir un dispositif d'essais pour chaque groupe, ce qui conduit, compte tenu du nombre relativement petit des terminaux dans un groupe et de la fréquence relativement faible des essais, à un taux d'utilisation très bas des dispositifs d'essais.

Cet inconvénient est surmonté par l'emploi d'un relais d'isolement associé à chaque groupe de terminaux. Le dispositif d'essais est alors commun à tous les groupes et le bus d'essais de lignes et le bus d'essais de terminaux sont reliés à tous les relais d'isolement. Un dispositif de ce type est décrit dans la demande de brevet français publiée n° 2 503 500 « Dispositif de secours de terminal d'abonné ». Dans cette demande un groupe est constitué par des unités terminales elles-mêmes formées par un certain nombre de terminaux et une unité terminale de secours ; lorsqu'un terminal d'une unité terminale tombe en panne, c'est toute cette unité terminale qui est basculée sur l'unité terminale de secours par activation des relais de renvoi aux essais de cette unité terminale. Le dispositif d'essais est commun à tous les groupes et il est possible d'effectuer des essais groupe par groupe, à l'exception du groupe dans lequel un terminal est en panne. Du fait que dans le dispositif décrit dans cette demande de brevet français ce sont toutes les lignes d'abonnés d'une unité terminale qui sont connectées à l'unité terminale de secours, on ne peut effectuer d'essais dans ce groupe que lorsqu'aucun des abonnés reliés à l'unité terminale de secours n'est en communication.

L'invention a pour but de permettre d'effectuer des essais dans un groupe ayant un terminal en panne.

L'invention a pour objet un dispositif de secours d'un terminal d'abonné dans un concentrateur numérique relié à un bus d'essais de lignes et à un bus de terminaux, un concentrateur comportant : des unités terminales constituées chacune par plusieurs terminaux et des relais associés à chaque terminal, un terminal et le relais qui lui est associé dans une des unités terminales servant de terminal de secours et de relais de secours, chaque relais ayant un premier jeu de contacts pour relier deux fils d'une ligne d'abonné au terminal en position repos et au bus d'essais de lignes en position travail et un deuxième jeu de contacts pour relier le terminal aux fils de la ligne d'abonné en position repos et au bus d'essais de terminaux en position travail, chaque unité terminale comportant une logique de commande commandant les relais, caractérisé par le fait que les unités terminales du concentrateur sont reliées entre elles par un bus de secours interne au concentrateur, que le premier jeu de contacts du relais de secours est relié directement au bus de secours qui joue le rôle de ligne d'abonné pour ledit relais de secours, que chaque unité terminale comporte un relais d'isolement ayant un premier jeu de contacts connecté par deux fils de ligne à tous les relais pour relier lesdits fils de ligne au bus de secours en position repos et au bus d'essais de lignes en position travail, et un deuxième jeu de contacts connectés par deux fils de joncteurs à tous les relais pour relier lesdits fils de joncteurs au bus d'essais de terminaux en position travail et isoler lesdits fils de joncteurs du bus d'essais de terminaux en position repos, que dans les relais lesdits fils de ligne et fils de joncteurs sont normalement isolés des lignes d'abonnés et des terminaux lorsque les relais sont au repos et reliés par les premier et deuxième jeux de contacts des relais aux fils des lignes d'abonnés et aux terminaux, respectivement, lorsque les relais sont en position travail, que les relais d'isolement sont normalement au repos et un des relais est en position travail lorsque le terminal associé est en panne, et que pour les essais des lignes d'abonnés et des terminaux d'une unité terminale le relais d'isolement de cette unité terminale est en position travail et les relais sont successivement en position travail.

L'invention va être décrite à l'aide d'un exemple de réalisation illustré par les figures annexées dans lesquelles

— la figure 1 représente à titre d'exemple le schéma général d'un centre satellite numérique auquel s'applique l'invention,

— la figure 2 représente un concentrateur numérique de la figure 1 avec le dispositif de secours de l'invention,

— la figure 3 représente partiellement une unité terminale du concentrateur numérique de la figure 2.

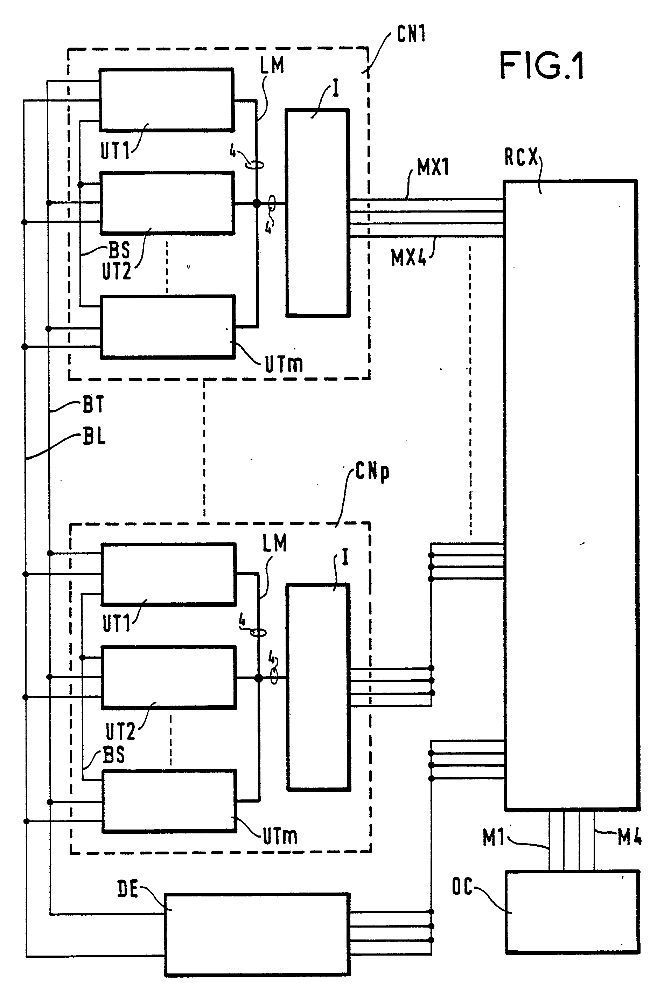

La figure 1 représente le schéma général d'un centre satellite numérique auquel s'applique l'invention. Un tel centre satellite numérique est constitué de p concentrateurs numériques CN1 à CNp, reliés chacun par des lignes multiplex MX1 à MX4 à un réseau de connexion RCX relié lui-même par des lignes multiplex M1 à M4 à un organe de commande OC.

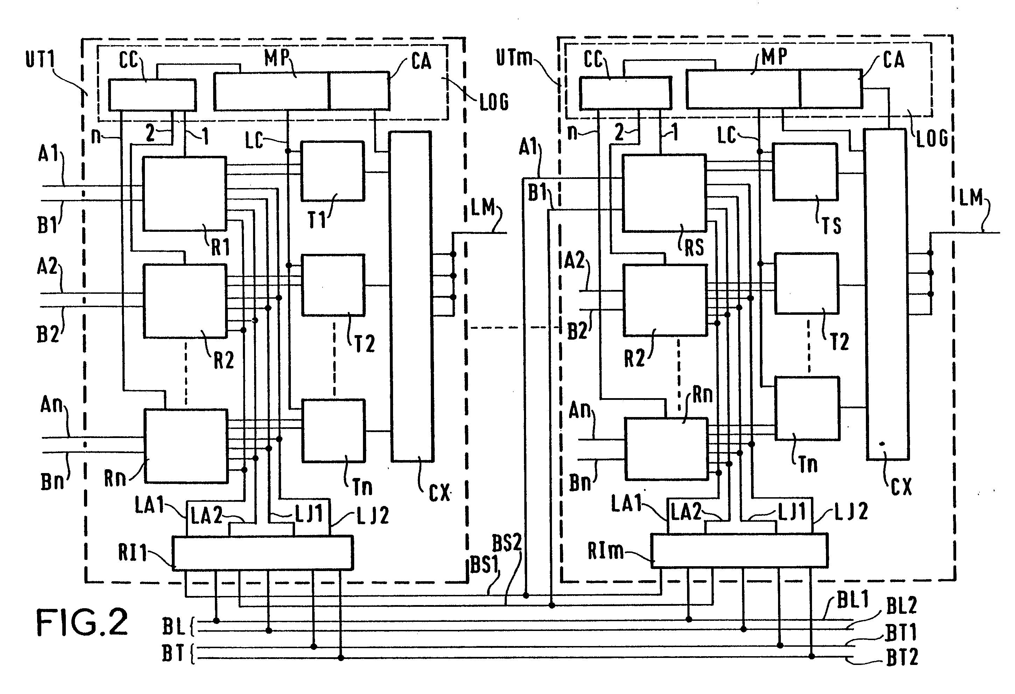

Chaque concentrateur numérique comporte m unités terminales UT1 à UTm reliées par une liaison multiplex LM constituée par quatre lignes multiplex à une interface I elle-même reliée aux lignes multiplex MX1 à MX4. Chaque unité terminale comporte n terminaux, non représentés, soit un terminal par abonné. Chaque terminal est de préférence un terminal numérique qui assure toutes les fonctions regroupées sous la désignation BORSCHT, comme cela est bien connu. Un dispositif d'essais DE permet d'effectuer des essais sur les lignes d'abonnés et les terminaux par l'intermédiaire d'un bus d'essais de ligne BL et d'un bus d'essais de terminaux BT ; le dispositif d'essais DE est également relié au réseau de connexion RCX par des lignes multiplex, les essais étant commandés par l'organe de commande OC. Conformément à l'invention, chaque unité terminale des concentrateurs numériques est reliée aux bus de ligne BL et de terminaux BT, et dans chaque concentrateur les unités terminales sont reliées entre elles par un bus de secours BS, une seule unité terminale du concentrateur comportant un terminal de secours, comme cela est représenté figure 2. Chaque unité terminale comporte par exemple 16 terminaux et un concentrateur comporte 16 unités terminales, soit 256 terminaux ; comme il y a un terminal de secours dans le concentrateur, celui-ci a donc 255 terminaux reliés chacun à une ligne d'abonné.

La figure 2 représente les unités terminales d'un concentrateur numérique de la figure 1, constitué de m unités terminales UT1 à UTm. Chaque unité terminale comprend n terminaux T1 à Tn reliés à des lignes d'abonnés A1 B1, A2 B2, ... An Bn, respectivement, par l'intermédiaire de relais R1, R2, ... Rn, un commutateur CX relié d'une part à chaque terminal et d'autre part à l'interface I du concentrateur par une liaison multiplex, LM constituée par quatre lignes multiplex, un relais d'isolement, RI1 à RIm, respectivement, relié d'une part au bus de secours BS, au bus d'essais de lignes BL et au bus d'essais de terminaux BT, et d'autre part à tous les relais par deux fils de lignes LA1 et LA2 et par deux fils de joncteurs LJ1 et LJ2 ; une logique de commande LOG comporte essentiellement un microprocesseur MP relié aux terminaux T1 à Tn par une liaison de commande LC et au commutateur CX à travers un circuit d'accès CA. Le microprocesseur MP est par exemple un circuit de la famille 8031 de INTEL ; le circuit d'accès CA et le commutateur CX sont intégrés dans un boîtier TP 3120 de National semi-conducteur ; le circuit d'accès CA permet la supervision des échanges de messages entre le microprocesseur MP et l'organe de commande OC du centre satellite sur un canal sémaphore des liaisons multiplex LM, MX1 à MX4, et M1 à M4 reliant une unité terminale à l'organe de commande OC ; la supervision des échanges se fait selon la procédure connue dite HDLC.

La logique de commande LOG comporte également un circuit de commande CC relié en entrée au microprocesseur MP ; le circuit de commande a n sorties 1, 2, ... n, reliées aux relais R1 à Rn, respectivement.

Les relais R1 à Rn des unités terminales UT1 à UTn sont normalement au repos et dans cette position relient directement les terminaux T1 à Tn aux fils A1, B1, An, Bn, des lignes d'abonnés.

Les relais d'isolement RI1 à RIm sont également normalement au repos ; dans cette position les fils de lignes LA1 et LA2 sont reliées à deux lignes BS1 et BS2 du bus de secours BS, respectivement, et les fils de joncteurs LJ1 et LJ2 ne sont pas reliés aux deux lignes BT1 et BT2 du bus de terminaux BT ; les fils de lignes LA1 et LA2 d'une part et les fils de joncteurs LJ1 et LJ2 d'autre part ne sont reliés aux lignes BL1 et BL2 du bus de ligne BL et BT1, BT2 du bus de terminaux que lorsque les relais d'isolement RI1 à RIm sont alimentés, donc en position travail.

Dans l'unité terminale UTm, qui est identique aux autres unités terminales, le premier terminal TS est un terminal de secours et le premier relais RS qui lui est associé est relié aux fils BS1 et BS2 du bus de secours BS par les fils A1 B1 qui ne sont donc pas reliés à un abonné.

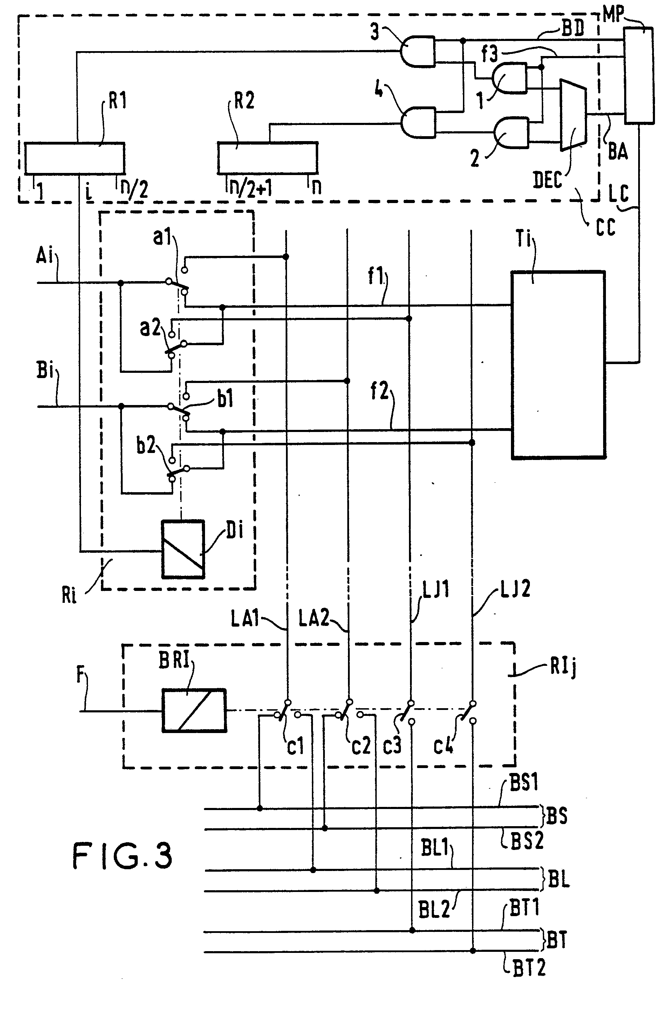

La figure 3 représente en partie une unité terminale UTj du concentrateur de la figure 2 et plus particulièrement un relais Ri, le relais d'isolement RIj et le circuit de commande CC de cette unité terminale UTj, ces relais étant dans leur position normale, c'est-à-dire au repos.

Le relais Ri comporte deux jeux de contacts a1, b1 et a2, b2, le premier jeu de contacts étant relié aux fils Ai et Bi de la ligne d'abonné, le deuxième jeu de contacts étant relié par deux fils f1, f2 au terminal Ti ; en position repos les deux jeux de contacts relient les fils Ai et Bi au terminal Ti par l'intermédiaire des fils f1 et f2. En position travail le premier jeu de contacts a1, b1 relie les fils Ai, Bi aux fils de lignes LA1 et LA2, respectivement, et le deuxième jeu de contacts a2, b2 relie les fils f1 et f2, donc le terminal Ti, aux fils de joncteurs LJ1 et LJ2, respectivement. Le relais Ri est mis en position travail par commande de sa bobine Di par le circuit de commande CC qui comporte un décodeur DEC, quatre portes ET, 1, 2, 3, 4, et deux registres R1 et R2. Le microprocesseur MP est relié au décodeur DEC par un bus d'adresses BA, à une entrée des portes ET 1 et 2 par un fil d'écriture f3, et à une entrée des portes ET 3 et 4 par un bus de données BD ; la sortie de la porte ET 1 est reliée à une autre entrée de la porte ET 3, et la sortie de la porte ET 2 est reliée à une autre entrée de la porte ET 4 ; la sortie de la porte ET 3 est reliée à une entrée parallèle du registre R1 et la sortie de la porte ET 4 est reliée à une entrée parallèle du registre R2. Les registres ont chacun n/2 sorties : les sorties 1 à n/2 du registre R1 sont reliées aux bobines des relais R1 à Rn/2, respectivement, les sorties n/2 + 1 à n du registre R2 sont reliées aux bobines des relais Rn/2 + 1 à Rn. Le microprocesseur MP commande les relais R1 à Rn par l'intermédiaire des registres R1 et R2. Pour activer un relais, c'est-à-dire pour le mettre en position travail, le microprocesseur MP présente l'adresse correspondant au registre R1 ou R2 sur le bus d'adresse BA, et présente la donnée sur le bus de données BD cette donnée consistant en un bit de valeur 1 pour le relais à activer dans le registre correspondant, les autres bits ayant la valeur 0 ; enfin le microprocesseur délivre un signal d'écriture par le fil d'écriture f3 qui permet de mémoriser l'état du bus de données BD dans le registre R1 ou R2 selon l'adresse délivrée par le décodeur DEC.

Le relais d'isolement Rlj comporte un premier jeu de contacts c1, c2 et un deuxième jeu de contacts c3, c4, les contacts c1 à c4 étant reliés aux fils de lignes LA1, LA2 et aux fils de joncteurs LJ1, LJ2, respectivement. Au repos les contacts c1 et c2 relient les fils de lignes LA1, LA2 aux fils BS1 et BS2 du bus de secours, respectivement, et les contacts c3 et c4 ne relient pas les fils de joncteurs LJ1 et LJ2 aux fils BT1 et BT2 du bus de terminaux. En position travail les contacts c1 et c2 relient les fils de lignes LA1 et LA2 aux fils BL1 et BL2 du bus de lignes, respectivement, et les contacts c3 et c4 relient les fils de joncteurs LJ1 et LJ2 aux fils BT1 et BT2, respectivement. Le relais d'isolement Rlj est mis en position travail par commande de l'alimentation de sa bobine BRI par le microprocesseur MP de l'unité terminale UTj, commande délivrée par un fil F.

Lorsque dans un concentrateur un terminal Ti d'une unité terminale UTj tombe en panne le microprocesseur MP de cette unité terminale met, par l'intermédiaire du circuit de commande CC, le relais Ri en position travail ; la ligne d'abonné Ai Bi est alors reliée par les contacts a1 et b1 du relais Ri, les fils de lignes LA1 et LA2 et les contacts c1 et c2 du relais d'isolement Rlj, aux fils BS1 et BS2 du bus de secours, et par conséquent, par l'intermédiaire du relais RS de l'unité terminale UTm, au terminal de secours TS. On remarquera que si le terminal en panne Ti appartient à l'unité terminale UTm, la ligne d'abonné Ai Bi est reliée au terminal de secours TS par les contacts a1, b1 du relais Ri et les contacts c1, c2 du relais d'isolement Rlm ; le basculement d'une ligne d'abonné sur le terminal de secours s'effectue donc de la même manière, que le terminal en panne appartienne ou non à l'unité terminale dans lequel le terminal de secours est situé.

Les essais des lignes d'abonnés et des joncteurs, se font en mettant, dans une unité terminale, le relais d'isolement en position travail pour relier les fils de lignes LA1 et LA2 au fils BL1 et BL2 du bus de ligne et les fils de joncteurs LJ1 et LJ2 aux fils du bus de terminaux BT1 et BT2, et en commandant individuellement les relais R1 à Rn. Il est donc possible de procéder aux essais dans toutes les unités terminales de tous les concentrateurs CN1 à CNp du centre satellite, sauf dans l'unité terminale de chaque concentrateur ayant un terminal Ti en panne et pendant tout le temps où l'abonné normalement relié au terminal en panne est en communication ; dès que cet abonné n'est plus en communication il est possible de procéder aux essais dans l'unité terminale à laquelle il appartient en mettant le relais Ri au repos. On remarquera que dans l'unité terminale UTm dans laquelle le terminal de secours est situé il est possible d'effectuer des essais des lignes et terminaux T2 à Tn lorsque le terminal de secours est en service puisque le raccordement du relais RS associé audit terminal de secours est effectué directement sur les fils BS1 et BS2 du bus de secours et non par l'intermédiaire des contacts c1 et c2 du relais d'isolement Rlm, sauf bien entendu si le terminal en panne est situé dans cette unité terminale UTm.

Alors que dans la demande de brevet français n° 2 503 500, déjà citée, il n'était plus possible de procéder à des essais dans un groupe ayant un terminal en panne (un tel groupe constituant un concentrateur), le dispositif de l'invention permet de procéder à des essais dans toutes les unités terminales du concentrateur à l'exception de celle ayant un terminal en panne. Dans l'exemple déjà indiqué d'un concentrateur constitué de 16 unités terminales ayant chacune 16 terminaux, il n'y a qu'une unité terminale, donc 16 lignes d'abonnés et 16 terminaux, qui ne peuvent être essayés, aussi longtemps que l'abonné normalement relié au terminal en panne est en communication. Dans la demande de brevet n° 2 503 500 il y a, dans un groupe, une unité terminale de secours sur laquelle on bascule une unité terminale ayant un terminal en panne, de sorte que pour procéder à des essais dans le groupe il faut attendre qu'aucun des abonnés reliés à l'unité terminale secourue ne soit en communication, alors que dans le dispositif de secours de l'invention il n'y a basculement que du seul terminal en panne et par conséquent pour effectuer des essais dans l'unité terminale correspondante, il faut attendre seulement que l'abonné normalement relié audit terminal en panne ne soit plus en communication.

Le rapport entre le nombre de terminaux de secours, et le nombre de terminaux actifs, c'est-à-dire reliés à une ligne d'abonné, doit être tel que la probabilité de panne simultanée de deux joncteurs actifs soit négligeable. Dans l'exemple cité, le ratio un terminal de secours pour 255 terminaux actifs est convenable.

Dans l'exemple illustré figure 1, le dispositif d'essais DE est commun aux concentrateurs CN1 à CNp, mais bien évidemment, un dispositif d'essais peut être associé à chaque concentrateur sans que cela modifie en quoi que ce soit l'invention.

## Revendications

1. Dispositif de secours d'un terminal d'abonné dans un concentrateur numérique relié à un bus d'essais de lignes (BL) et à un bus d'essais de terminaux (BT), un concentrateur comportant : des unités terminales (UT1 à UTm) constituées chacune par plusieurs terminaux (T1 à Tn) et des relais (R1 à Tn) associés à chaque terminal, un terminal (TS) et le relais qui lui est associé dans une des unités terminales servant de terminal de secours (TS) et de relais de secours (RS), chaque relais ayant un premier jeu de contacts (a1, b1) pour relier deux fils (Ai, Bi) d'une ligne d'abonné au terminal en position repos et au bus d'essais de lignes en position travail et un deuxième jeu de contacts (a2, b2) pour relier le terminal aux fils de la ligne d'abonné en position repos et au bus d'essais de terminaux en position travail, chaque unité terminale comportant une logique de commande (LOG) commandant les relais, caractérisé par le fait que les unités terminales du concentrateur sont reliées entre elles par un bus de secours (BS) interne au concentrateur, que le premier jeu de contacts (a1, b1) du relais de secours (RS) est relié directement au bus de secours qui joue le rôle de ligne d'abonné pour ledit relais de secours, que chaque unité terminale comporte un relais d'isolement (RIi) ayant un premier jeu de contacts (c1, c2) connecté par deux fils de lignes (LA1, LA2) à tous les relais pour relier lesdits fils de lignes au bus de secours (BS) en position repos et au bus d'essais de lignes (BL) en position travail, et un deuxième jeu de contacts (c3, c4) connectés par deux fils de joncteurs (LJ1, LJ2) à tous les relais pour relier lesdits fils de joncteurs au bus d'essais de terminaux (BT) en position travail et isoler lesdits fils de joncteurs du bus d'essais de terminaux en position repos, que dans les relais lesdits fils de lignes (LA1, LA2) et fils de joncteurs (LJ1, LJ2) sont normalement isolés des lignes d'abonnés et des terminaux lorsque les relais (R1 à Rn) sont au repos et reliés par les premier et deuxième jeux de contacts (a1, b1 ; a2, b2) des relais aux fils des lignes d'abonnés et aux terminaux, respectivement, lorsque les relais sont en position travail, que les relais d'isolement (RI1 à RIm) sont normalement au repos et un des relais est en position travail lorsque le terminal associé est en panne, et que pour les essais des lignes d'abonnés et des terminaux d'une unité terminale (UTj) le relais d'isolement (RIj) de cette unité terminale est en position travail et les relais sont successivement en position travail.

2. Dispositif de secours selon la revendication 1, caractérisé par le fait que dans une unité terminale (UT1) le relais (Ri) associé à un terminal (Ti) en panne est mis en position travail par la logique de commande (LOG) de ladite unité terminale.

## Claims

1. An emergency subscriber terminal device in a digital concentrator connected to a line test bus (BL) and to a terminal test bus (BT), a concentrator comprising : terminal units (UT1 to UTm) each of which is constituted by a plurality of terminals (T1 to Tn) and by relays (R1 to Tn), each of which is associated with a terminal, one of the terminals and the relay associated therewith in one of the terminal units serving as an emergency terminal (TS) and as an emergency relay (RS) respectively, each terminal relay having a first set of contacts (a1, b1) for connecting two wires (Ai, Bi) of a subscriber line to the terminal in the rest position and to the line test bus in the working position, and a second set of contacts (a2, b2) for connecting the terminal to the wires of the subscriber line in the rest position and to the terminal test bus in the working position, each terminal unit including a logic control circuit (LOG) controlling the relays, is characterized in that the terminal units of the concentrator are interconnected ty an emergency bus (BS) which is internal to the concentrator, that a first set of contacts (a1, b1) of the emergency relay (RS) is directly connected to the emergency bus which acts as a subscriber line for the said emergency relay, that each terminal unit includes an isolating relay (RTi) having a first set of contacts (c1, c2) connected via two line wires (LA1, LA2) to all the relays for connecting the said line wires to the emergency bus (BS) in the rest position and to the line test bus (BL) in the working position, and a second set of contacts (c3, c4) connected via two junctor wires (LJ1, LJ2) to all of the relays for connecting the said junctor wires to the terminal test bus (BT) in the working position and for isolating the said junctor wires from the terminal test bus in the rest position, that said line wires (LA1, LA2) and the said junctor wires (LJ1, LJ2) are normally isolated from the subscriber lines and the terminals in the said relays so long as the relays (R1 to Rn) are in the rest position, and are connected by the first and second sets of contacts (a1, b1 ; a2, b2) of the relays to the subscriber line wires and to the terminals respectively when the relays are in the working position, that the isolating relays (RI1 to RIm) are normally at rest and one of the relays is in the working position when the terminal associated therewith is faulty, and that to test subscriber lines and terminals in a terminal unit (UTj), the isolating relay (RIj) of the said terminal unit is put into the working position, and the relays thereof are successively put into the working position.

2. An emergency subscriber terminal device according to claim 1, characterized in that in a terminal unit (UT1) the relay (Ri) associated to a faulty terminal (Ti) is activated to the working position by the logic control circuit (LOG) of the said terminal unit.

**Patentansprüche**

1. Hilfsvorrichtung eines Teilnehmerendgeräts in einem digitalen Konzentrator, die an eine Leitungstestschiene (BL) und an eine Endgerätetestschiene (BT) angeschlossen ist, wobei ein Konzentrator aufweist : Endgeräteeinheiten (UT1 bis UTm) bestehend je aus mehreren Endgeräten (T1 bis Tn) und den jedem Endgerät zugeordneten Relais (R1 bis Tn), wobei ein Endgerät (TS) und das ihm zugeordnete Relais in einer der Endgeräteeinheiten als Hilfsendgerät (TS) und Hilfsrelais (RS) dienen und jedes Relais einen ersten Kontaktsatz (a1, b1) zur Verbindung zweier Drähte (Ai, Bi) einer Teilnehmerleitung mit dem Endgerät in Ruhestellung und mit der Leitungstestschiene in Arbeitsstellung, und einen zweiten Kontaktsatz (a2, b2) aufweist zur Verbindung des Endgeräts mit den Drähten der Teilnehmerleitung in Ruhestellung und der Endgerätetestschiene in Arbeitsstellung, wobei jede Endgeräteeinheit eine die Relais steuernde Steuerlogik (LOG) besitzt, da- durch gekennzeichnet, daß die Endgeräteeinhei- ten des Konzentrators untereinander über eine innerhalb des Konzentrators verlaufende Hilfsschiene (BS) verbunden sind, daß der erste Kontaktsatz (a1, b1) des Hilfsrelais (RS) direkt mit der Hilfsschiene verbunden ist, die die Rolle einer Teilnehmerleitung für das Hilfsrelais spielt, daß jede Endgeräteeinheit ein Isolationsrelais (RIi) besitzt, mit einem ersten Kontaktsatz (c1, c2), der über zwei Leitungsdrähte (LA1, LA2) an alle Relais angeschlossen ist, um diese Leitungsdrähte an die Hilfsschiene (BS) in Ruhestellung und an die Leitungstestschiene (BL) in Arbeitsstellung anzuschließen, und mit einem zweiten Satz von Kontakten (c3, c4), die über zwei Drähte (LJ1, LJ2) der Verbindungsschaltungen mit der Endgerätetestschiene (BT) in Arbeitsstellung verbunden sind und diese Drähte von der Endgerätetestschiene in Ruhestellung abtrennen, daß in den Relais die Leitungsdrähte (LA1, LA2) und die Drähte der Verbindungsschaltungen (LJ1, LJ2) normalerweise von den Teilnehmerleitungen und Endgeräten getrennt sind, wenn die Relais (R1 bis Rn) sich in Ruhestellung befinden, während sie über den ersten und den zweiten Satz von Kontakten (a1, b1 ; a2, b2) der Relais mit den Drähten der Teilnehmerleitungen bzw. den Endgeräten verbunden sind, wenn die Relais sich in Arbeitsstellung befinden, daß die Isolationsrelais (RI1 bis RIm) sich normalerweise in Ruhestellung befinden und eines der Relais sich in Arbeitsstellung befindet, wenn das zugeordnete Endgerät ausfällt, und daß für die Tests der Teilnehmerleitungen und der Endgeräte einer Endgeräteeinheit (UTj) das Isolationsrelais (RIj) dieser Endgeräte- einheit in Arbeitsstellung ist und die Relais nacheinander in Arbeitsstellung sind.

2. Hilfsvorrichtung nach Anspruch 1, dadurch gekennzeichnet, daß in einer Endgeräteeinheit (UT1) das einem ausgefallenen Endgerät (Ti) zugeordnete Relais (Ri) durch die Steuerlogik (LOG) dieser Endgeräteeinheit in die Arbeitsstellung gebracht wird.

FIG.1

FIG.2

FIG.3